# EUROPEAN PATENT APPLICATION

(11) **EP 0 579 569 A1**
(43) Date of publication of application: **19.01.1994**
(21) Application number: 93500088.5
(22) Date of filing: 19.06.1993
(51) Int. Cl.: F16K 1/34

(54) **Self-protecting seat valve absolutely free of gaskets**

(30) Priority: 23.06.1992 ES 9201308
(71) Applicant: PURGADORES DE CONDENSADO, S.L., E-28027 Madrid (ES)
(72) Inventor: Navarro, Vicente Blazquez, E-28027 Madrid (ES)

(57) **Abstract**

**SELFPROTECTING SEAT VALVE ABSOLUTLY FREE OF GASKETS** which can be applied to all types of industrial valves and all kind of fluids characterized by selfprotective effect of one of its elements onto the others and it does not require any union's gaskets between its elements. A new packing bush (7) improve the packing box.

The single seat is replaced by a double seat (2). The first seat (1) stay always close to protect the seat welded onto body (0) while a second seat is operative and can be easily replaceable when it is damaged.

The most important thing is the first seat (1) and the body (0) never can be destroyed by the erosion, therefore maintenance problems caused by wear and tear erosion can be easily resolved with this new selfprotecting seat, saving time and lots of money.

## Description

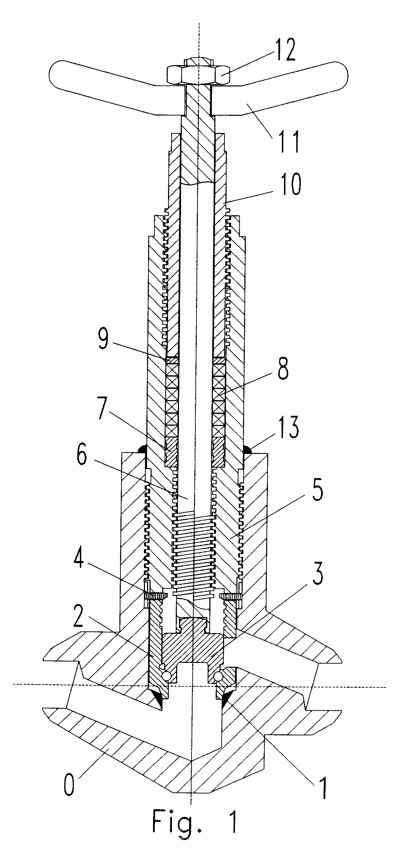

The present specification corresponds to a Patent of Invention regarding a new prototype of **SELFPROTECTING SEAT** **VALVE ABSOLUTLY FREE OF GASKETS** (subsequently refered S.S.V.). This prototype (shown on Fig. 1) can be applied to all types of industrial valves (check, stop, control, safety or special valves), for manipulation, regulation, control or processing of all kind of fluids, homogeneous or not, in the widest range of density, viscosity, pressure and temperature.

This new S.S.V. is **characterized** by selfprotective effect of one of its elements onto the others. In fact an intermediate double cone-seat (2) protects the primary seat (1) and the body (0) from the wear and tear erosion effects.

It is also **characterized** by the fact it does not require any union's gaskets between its elements and between them and the body (0) too and it is formed of a fixed primary seat (1), a fixed intermediate double cone-seat (2) and a movable main cone (3), incorporating optionaly a reliable pressure-tight backseat (4) and backcone on the top of the cone (3) for high leakage requirements. Intermediate double cone-seat (2) and main cone (3) incorporate a double ring seat with an expansion ring chamber in between them to reduce erosion effects. The pieces (2), (3) and (4) are replaceable showing a wide variety of geometric shapes, sizes, and construction materials in their widest non limitative sense.

Lastly it is also **characterized** by a new **PACKING BUSH** (7) located inside of the packing box made of stainless steel or similar whih several expansion ring chambers on both sides to reduce passage of fluids to upper side of the packing box and protect graphite packing rings (8).

The application of new technologies of superficial treatment of materials offers seats harder and wear resistent materials to prolong their service-life, but these seats don't avoid their eventual damage and later reparation.

The diverse types of valves gathered and mentioned in the state of art can be grouped into two categories:
a) Integral seat valves built onto the body by deposition of special materials by welding process.
b) Replaceable seat valves binded to de body by screwed elements which always need intermediate union's gaskets made of softer and deformable materials to avoid leaks through them.

Both types of closing seats cause serious maintenance problems because the first ones are not easily repairable and always demand very specific tools and machines and very specialized operators capable to realize welded deposition of hard materials, e.g. stellite, that after have to be machined with great accuracy by finishing operations until they get very smooth surfaces to warrant an hermetic close. These reparations not always get satisfactory results and it is usualy prefered to change the valve completely. Normally all this process, which has a high cost, cannot be done "in situ" and force onerous and unnecessary stops.

Type (b) resolve theoretically some of the mentioned problems because it offers easy interchangeability of its components, but in practice the extreme pressure, temperature and vibration conditions which must support those elements produce expansions, contractions and deformities on the union's gaskets that cause leaks through them and destroy not only gaskets but the closing seats and the body too. The new S.S.V. provides long service-life and reliable valves which reduce losses of fluids, energy or pressure and improve productivity and rentability, reducing costs of maintenance. In other cases it provides improvement in work safety conditions.

The absolutly new definition of the S.S.V. being the subject matter of this patente of invention, offers the best solution to the stated problem. It presents enormous advantages in regard with previous types of valves known, gathered and mentioned in the state of art.

**This advantages are:**
1.- The S.S.V. efficiently impedes wear and tear erosion of the primary seat (1) which is the vital part of the valve because it is integrated or bended to the body and therefore the S.S.V. impedes damage to the body. The intermediate seat-cone (2) is partially selfprotecting and it protects also the body from the wear and tear erosion effects.
2.- The full absence of screwed union and gaskets on this S.S.V. eliminates efficiently the risk of leaks through them which is the main problem of valves.
3.- All S.S.V. elements able to be damaged are independents and easily replaceable "in situ" without need to remove the valve from the installation. The substitution of these elements can be done by unspecialized operators in this matter but the best results are always obtained.

It is evident that S.S.V. incorporates an essential new concept and absolutly innovating advantages which until this invention was fully unknow, thereby the absolutly novelty and innovation thereof.

It is also evident that all type of industrial valves are able to use this new selfprotecting seat (check, stop, control, safety an special valves) therefore a continuation will be described in detail three of the most characteristics S.S.V.: a selfprotecting check valve, a selfprotecting stop valve and lastly a selfprotecting regulation valve. Notice that this description should be taken in their widest non limitative sense.

Figure 1 represents in section a **SELFPROTECTING STOP VALVE:**

It is formed of one body (0), with an integral primary seat (1) which is stellite hard faced by a special welding process to get excellent wear resistance and very smoothly finished. Inside and outside of the intermediate cone-seat (2), bottom and top seats of the cone (3), and conic backseat (4) will be covered by stellite, titanium nitride or similar and very acuracy finished to ensure hermetic close, free of leaks.

Cover (5) provided of a quadrate screw press strongly cone-seat (2) against primary seat (1) by backseat (4) which allows sliding and compression cone-seat (2) without any twist. While the cover (5) is in tension must be peripheraly sealed by welding using the welding lip (13) to avoid leaks and to always maintain the primary seat (1) strongly closed. Main cone seat (3) is guided by piece (2). The hollow main cone (3) and intermediate seat-cone (2) has a crowned seating face which due to its elasticity increases the seating shut-off.

Intermediate seat-cone (2) has several expansion ring chambers at its inner side to reduce passage of fluids to upper side of the valve. This same effect happens through screwing between pieces (5) and (6) to protect stuffing box which is composed of highly prepressed packing rings made of graphite (8) and a new packing bush (7) with several expansion ring chambers on both sides to improve mentioned effect. Therefore graphite rings are long-life and efficiently protected againts leaks. Piece (10) transmits tension through a waster (9) which allows sliding and compression of graphite rings (8) without any twist.

Stuffing box, packing bush and stem (6) must be accurately sized, machined and fine finished to prevent leaks.

The stem (6) and handwheel (11) move up and down main cone (3), which is the only part of the S.S.V. being moved during operation time.

The most important thing is that **intermediate seat-cone (2) can never open** **primary seat (1)** due to the strong force realized by cover (5), therefore this seat is very long-lived, reliable and free of wear and tear due to erosion and there is no danger of fouling due to dirt, welding spatters or similar matter which could affect this seat. **The only parts submited to wear are intermediate cone-seat** **(2) and main cone (3)** which are easily replaceable, with low cost, without need to remove the valve from the pipeline. **Primary seat and body are always protected by this characteristic method of operation.**

**There are not any gasket inside the valve.** After repair the valve becomes fully functional as new again.

Piece (10) sould be eventualy re-tightned when leak appear through stuffing box.

Notice that the cover (5) could not be welded to the body but that would require a body gasket and would be less secure against leaks. The valve can incorporates an additional yoke which permit an optinal disposition to the stuffing box and maneovre of the valve.

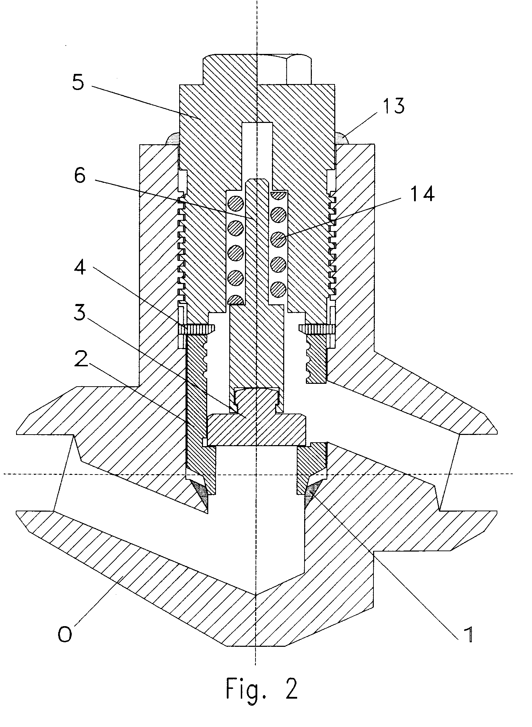

Figure 2 represents in section a **SELFPROTECTING CHECK VALVE:**

It is formed of one body (0) with an integral primary seat (1) which is stellite hard faced by a special welding process to get excellent wear resistance and very smoothly finished. Inside and outside of the intermediate cone-seat (2) and main cone (3), will be covered of stellite, titanium nitride or similar and very acuracy finished to ensure hermetic close, free of leaks.

Cover (5) provided of a quadrate screw press strongly cone-seat (2) against seat (1). While the cover (5) is in tension must be peripheraly sealed by welding on top using the welding lip (13), to avoid leaks and to always maintain the primary seat (1) strongly closed.

Main seat (3) is double guided by a long stem (6). The austenitic spring (14) helps to close the valve when the flow is inverted.

During its operation the main cone (3) is the only part being moved. The most important thing is that **intermediate cone-seat (2) can never open primary seat (1)** due to the stong force realized by cover (5), therefore this seat is very long-lived, reliable and free of wear and tear erosion and there is no danger of fouling due to dirt, welding spatters or similar matter which can affect this seat. There are not any gasket inside the valve. **The only parts submitted to erosion are intermediate** **cone-seat (2) and main cone (3),** which are easily replaceable, with low cost, without need to remove the valve from the pipeline. **Primary seat and body are always protected by this characteristic method of operation.**

**There are not any gasket inside the valve.** After repair the valve becomes fully functional as new again.

Notice that the cover (5) could not be welded to the body but that would require a body gasket and would be less secure against leaks.

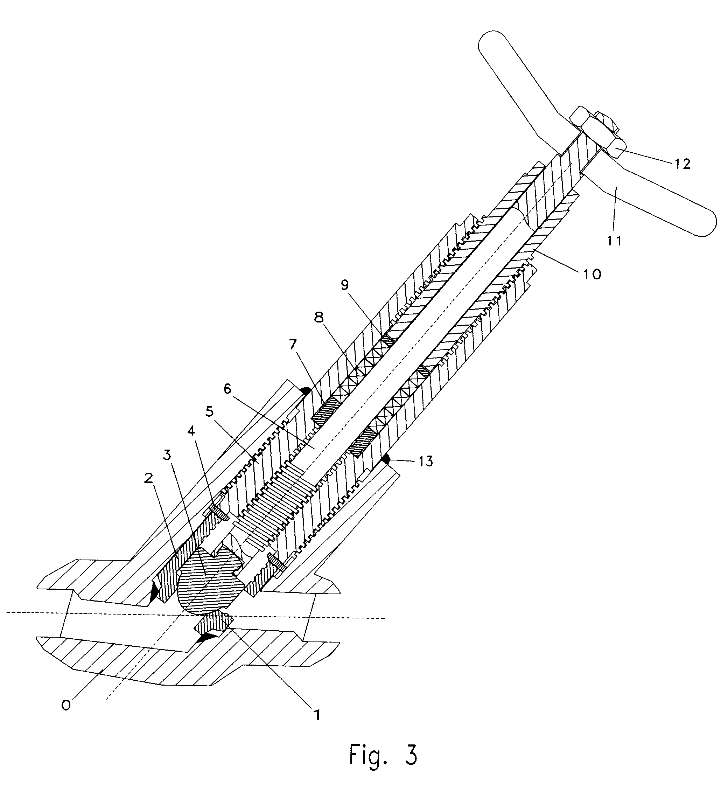

Figure 3 represents in section a **SELFPROTECTING REGULATION VALVE:**

The inclined body (0) and the main cone (3) has been designed as a parabolical cone which are the only difference respect above stop valve shown in Fig. 1.

The shape, disposition, and size of the elements can be very diverse but it does not mean any essential differency of the invention.

The materials for the S.S.V. elements can be also very diverse and always most adapted to the working conditions on each case, e.g. forging and casting steels, alloy and stainless steels, with any surface treatment (stellite, titanium nitride, metalic carbids or nitrides and similar).

The terms with which this specification has been described should be taken in their widest non limitative sense.

## Claims

1. **SELFPROTECTING SEAT VALVE ABSOLUTLY FREE OF GASKETS characterized** by the following selfprotecting elements:a fixed primary seat (1), a intermediate double cone-seat (2), and a movable main cone (3) incorporating optionaly a reliable pressure-tight backseat (4), showing a wide variety of geometric shapes, sizes, and construction materials in their widest non limitative sense.

2. **SELFPROTECTING SEAT VALVE ABSOLUTLY FREE OF GASKETS** according with claim 1, **characterized** by the fact that during its operation the main cone (3) is the only closing part being moved while intermediate cone-seat (2) can never open primary seat (1) due to the stong force realized by cover (5), therefore the only parts submitted to wear and tear erosion are intermediate cone-seat (2) and main cone (3), which are easily replaceable, with low cost, without need to remove the valve from the pipeline. Primary seat and body are always selfprotected by this characteristic method of operation.

3. **SELFPROTECTING SEAT VALVE ABSOLUTLY FREE OF GASKETS** according with previous claims, **characterized** by selfprotective effect of one of its elements (intermediate cone-seat) onto the others (primary seat and body) regarding the wear and tear erosion.

4. **SELFPROTECTING SEAT VALVE ABSOLUTLY FREE OF GASKETS** according with previous claims, **characterized** by the full absence of screwed union and gaskets between its closing elements and between them and the body too therefore it eliminates the risk of leaks through them which is the main problem of valves and can be appied for manipulation, safety, regulation, control or processing of all kind of fluids in the widest range of density, viscosity, pressure and temperature.

5. **SELFPROTECTING SEAT VALVE ABSOLUTLY FREE OF GASKETS** according with previous claims, **characterized** by a new **PACKING BUSH** (7) located inside of the packing box, made of stainless steel or similar, with several expansion ring chambers on both sides to reduce passage of fluids to upper side of the packing box and protect graphite packing rings (8).

6. **SELFPROTECTING SEAT VALVE ABSOLUTLY FREE OF GASKETS** according with previous claims, **characterized** by the fact its selfprotecting seat elements are independents and easily replaceable "in situ" without need to remove the valve from the installation and the substitution of these elements can be done by unspecialized operators in this matter but the best results are always obtained.

7. **SELFPROTECTING CHECK VALVE** according with claims 1 to 4 and with claim 6, **characterized** by it incorporates a selfprotecting seat with check valve function.

8. **SELFPROTECTING STOP VALVE** according with claims 1 to 6 **characterized** by it incorporates a selfprotecting seat with stop valve function.

9. **SELFPROTECTING REGULATION VALVE** according with claim 1 to 6 **characterized** by it incorporates a selfprotecting seat with characteristics and regulation cone.
